# EUROPÄISCHE PATENTSCHRIFT

(11) **EP 3 850 262 B1**
(45) Veröffentlichungstag und Bekanntmachung des Hinweises auf die Patenterteilung: **10.07.2024**
(21) Anmeldenummer: 19768716.3
(22) Anmeldetag: 09.09.2019
(51) Int. Cl.: F17C 3/02, F17C 13/00

(54) **TANK**
TANK
RÉSERVOIR

(30) Priorität: 11.09.2018 EP 18020446
(43) Veröffentlichungstag der Anmeldung: 21.07.2021
(73) Patentinhaber: Linde GmbH, 82049 Pullach (DE)
(72) Erfinder: KROL, Marian, 83109 Grosskarolinenfeld (DE); SCHMIDEDER, Christina, 80636 München (DE); WAAS, Till, 82223 Eichenau (DE); HANSLMAIER, Fabian, 81369 München (DE); ASEN, Peter, 82069 Hohenschäftlarn (DE)
(74) Vertreter: Lu, Jing
(86) Internationale Anmeldenummer: PCT/EP2019/025300
(87) Internationale Veröffentlichungsnummer: WO 2020/052811

(56) Entgegenhaltungen:
- EP-A1- 0 078 134
- EP-A1- 1 781 982
- EP-B1- 1 781 982
- JP-A- 2004 019 920
- KR-A- 20180 002 359
- US-A- 4 366 917

## Beschreibung

Die Erfindung betrifft einen Tank zum Lagern eines kryogenen Fluids. Zum Lagern von kryogenen Fluiden, wie beispielsweise Flüssigerdgas, sind geschlossene Flachbodentanks bekannt, die einen Außentank und einen innerhalb des Außentanks angeordneten Innentank umfassen. Zwischen dem Außentank und dem Innentank kann eine Wärmedämmung vorgesehen sein. Diese Wärmedämmung kann insbesondere auch zwischen einem Boden des Innentanks und einem Boden des Außentanks angeordnet sein. Wenn der Außentank aus Beton gefertigt ist, kann innenseitig an dem Außentank eine Dampfsperre, ein sogenannter Liner, vorgesehen sein. Dieser Liner sorgt für eine Gasdichtheit des Außentanks. Der Liner kann eine Stahlmembran umfassen. Um im Falle eines Austretens des kryogenen Fluids aus dem Innentank ein Eindringen desselben in die zwischen dem Boden des Innentanks und des Außentanks angeordnete Wärmedämmung oder ein Durchdringen bis zu dem Boden des Außentanks zu verhindern, kann auch die Wärmedämmung mit einer Stahlmembran, insbesondere mit einem sogenannten Second Bottom, geschützt werden. Auch dieser Second Bottom ist aus miteinander verbundenen Stahlplatten gefertigt. Der Second Bottom verhindert bei einem Austreten des kryogenen Fluids aus dem Innentank, dass das kryogene Fluid in die Wärmedämmung eindringt, bis zum Boden des Außentanks durchdringt und so ein Fundament des Tanks in unerwünschter Weise mit kryogenen Temperaturen beaufschlagt wird. Hierdurch wird verhindert, dass in dem Fundament in Folge von Temperaturdifferenzen Spannungen entstehen können, die zu einer Beschädigung des Fundaments führen könnten.

EP 1 781 982 A1 offenbart einen Speicherbehälter für kalte Flüssigkeiten.

Vor diesem Hintergrund besteht die Aufgabe der vorliegenden Erfindung darin, einen verbesserten Tank zum Lagern eines kryogenen Fluids zur Verfügung zu stellen.

Demgemäß wird ein Tank zum Lagern eines kryogenen Fluids, insbesondere zum Lagern von Flüssigerdgas, vorgeschlagen. Der Tank umfasst einen Außentank, einen Innentank, der innerhalb des Außentanks angeordnet ist, eine Bodendämmung, die zwischen einem Außentankboden des Außentanks und einem Innentankboden des Innentanks angeordnet ist, und eine flüssigkeitsdichte Folie, die zwischen dem Außentankboden und dem Innentankboden angeordnet ist. Die Folie ist stoffschlüssig mit einer Außentankwand des Außentanks verbunden. Erfindungsgemäß weist die Folie einen Metallanteil auf, beispielsweise eine Aluminiumschicht. Für den Fall, dass die Folie einen undurchdringlichen Stoff mit einer wasserdampfdiffusionsäquivalenten Luftschichtdicke größer als 1500 m (dies gilt beispielsweise für eine Aluminiumschicht mit einer Dicke von 0,05 mm) aufweist, kann die Folie als gasdicht angesehen werden. Für die Flüssigkeitsdichtigkeit ist dies nicht erforderlich. Alternative oder zusätzlich ist die Folie faserverstärkt, insbesondere glasfaserverstärkt. Die Folie kann auch kohlefaserverstärkt, aramidfaserverstärkt oder dergleichen sein. Hierdurch ist die Folie hochbelastbar.

Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel und/oder Verbindungspartner trennen lassen. Gemäß einer Ausführungsform ist die Folie mit der Außentankwand des Außentanks verklebt.

Die Folie verhindert zuverlässig, dass ein Fundament des Tanks mit unzulässig tiefen Temperaturen beaufschlagt wird, da diese ein Eindringen einer flüssigen Phase des kryogenen Fluids in die Bodendämmung unterbindet. Dadurch, dass eine Folie eingesetzt wird und keine steife Stahlmembran, werden auf die Außentankwand nur minimale Kräfte aufgebracht. Im Vergleich zu einem wie zuvor erläuterten, aus Stahlplatten gefertigten, Second Bottom kann die Folie mit geringerem Arbeitseinsatz deutlich schneller montiert werden. Dies reduziert die Montagekosten signifikant. Auch die Materialkosten werden signifikant reduziert. Die Montage der Folie wird dadurch noch vereinfacht, dass diese als einzelne Folienbahnen verlegt werden kann, die nach dem Verlegen stoffschlüssig miteinander verbunden werden. Eine aufwändige Vormontage der Folie ist nicht erforderlich. Das Layout der Folienbahnen und die Montagerichtung und -sequenz können individuell in Abhängigkeit der lokalen Bedingungen gewählt werden.

Die Folie kann als Flüssigkeitssperre, Flüssigkeitsbarriere oder Liquid Tight Barrier bezeichnet werden. Insbesondere ist die Folie dazu eingerichtet, zu verhindern, dass aus dem Innentank ausgetretenes Fluid in die Bodendämmung eindringt oder einsickert und dadurch aufgrund von Temperaturdifferenzen Spannungen in dem Fundament des Tanks induziert werden. Unter einer "Folie" ist vorliegend im Gegensatz zu einer Stahlmembran ein flexibel oder elastisch verformbares Bauteil geringer Dicke zu verstehen. Aufgrund ihrer geringen Dicke ist die Folie sehr flexibel und kann ohne merklichen Kraftaufwand gefaltet, gebogen oder verformt werden. Dies ermöglicht eine einfache Montage der Folie. Die Folie ist bevorzugt elastisch verfo rm bar.

Die Folie ist bevorzugt flüssigkeitsdicht und gasdurchlässig. Insbesondere weist die Folie bevorzugt eine flüssigkeitsdichte und gasdurchlässige oder nicht gasdichte Bauausführung oder Bauweise auf. Alternativ kann die Folie zusätzlich auch gasdicht sein.

Das kryogene Fluid ist bevorzugt Flüssigerdgas. Das kryogene Fluid kann jedoch auch flüssiges Ethen oder Ethylen (Siedepunkt bei Umgebungsdruck 169,43 K = -103,72 °C), flüssiges Ethan (Siedepunkt bei Umgebungsdruck 184,1 K = -88,9 °C) oder flüssiges Propan (Siedepunkt bei Umgebungsdruck 231,15 K = -42,1 °C) sein. Das kryogene Fluid kann einen gasförmigen Aggregatszustand und einen flüssigen Aggregatszustand aufweisen und von dem flüssigen Aggregatszustand in den gasförmigen Aggregatszustand und umgekehrt verbracht werden. Die Aggregatszustände können auch als Phasen bezeichnet werden. Das kryogene Fluid kann auch als kryogenes Gas oder als verflüssigtes tiefkaltes Gas bezeichnet werden. Der Tank ist insbesondere dazu eingerichtet, das kryogene Fluid in seinem flüssigen Aggregatszustand zu lagern. Wenn das kryogene Fluid von dem flüssigen Aggregatszustand in den gasförmigen Aggregatszustand übergeht, kann dieses als sogenanntes Boil-Off-Gas bezeichnet werden. Dieses Boil-Off-Gas kann beispielsweise mit Hilfe eines Abblasventils abgeblasen werden.

Der Außentank umfasst vorzugsweise den Außentankboden, die zuvor erwähnte, mit dem Außentankboden verbundene Außentankwand, die zylinderförmig ausgebildet und/oder rotationssymmetrisch zu einer Mittel- oder Symmetrieachse aufgebaut ist, sowie ein Außentankdach. Das Außentankdach ist vorzugsweise kuppelförmig und wölbt sich nach außen.

Der Innentank ist vollständig innerhalb des Außentanks angeordnet. Der Innentank umfasst neben dem Innentankboden eine Innentankwand, die ebenfalls bevorzugt zylinderförmig und rotationssymmetrisch zu der Symmetrieachse ausgebildet ist. Der Außentank und der Innentank sind bezüglich der Symmetrieachse vorzugsweise konzentrisch zueinander angeordnet. Der Innentank und der Außentank können auch quaderförmig oder würfelförmig sein. Der Innentank ist vorzugsweise als nach oben hin offene Tasse ausgebildet. Das heißt, der Innentank ist nicht fluiddicht. Der Innentank kann mit einer wärmedämmenden Abdeckung abgedeckt sein, die durch eine Tragstruktur, die mit Hilfe von Stäben oder Streben an dem Außentankdach abgehängt sein kann, getragen wird. Der Innentank kann alternativ auch mit einem Kuppeldach geschlossen sein. Beim Lagern des kryogenen Fluids kontaktiert das kryogene Fluid den Innentankboden und die Innentankwand.

Der Innentank ist vorzugsweise selbsttragend ausgebildet. Dies bedeutet, dass die Innentankwand derart ausgelegt ist, dass sie ihre Eigengewichtslast und die Gewichtslast des eingelagerten kryogenen Fluids vollständig selbst abträgt. In anderen Worten bedeutet dies, dass keine von innen oder außen seitlich die Innentankwand berührende Tankkomponente die Last der Innentankwand oder des kryogenen Fluids trägt.

Die Wandstärke der Innentankwand, und vorzugsweise des Innentankbodens, beträgt vorzugsweise mindestens 2 mm, vorzugsweise mindestens 4 mm und besonders bevorzugt mindestens 6 mm. Die Wandstärke der Innentankwand, und vorzugsweise des Innentankbodens, beträgt vorzugsweise bis zu 50 mm, weiter bevorzugt zu 40mm und besonders bevorzugst bis zu 30 mm.

Gemäß einer Ausführungsform weist die Folie ein Metall, insbesondere Aluminium, auf.

Insbesondere kann die Folie eine Metallfolie, insbesondere eine Aluminiumfolie, sein oder aufweisen. Beispielsweise kann die Folie mehrschichtig aufgebaut sein, wobei eine Schicht eine Metallfolie sein kann. Die Metallfolie kann auch als Metallseele, insbesondere als Aluminiumseele, der Folie bezeichnet werden. Die Folie kann jedoch auch eine metallisierte, insbesondere eine metallbedampfte, Kunststofffolie sein. Durch die Verwendung eines Metalls kann eine besonders gute Diffussionssperrwirkung erreicht werden. Anstatt Aluminium können auch andere geeignete Metalle eingesetzt werden. Beispielsweise weist Folie eine Aluminiumschicht mit einer Dicke von mindestens 0,05 mm auf, um als undurchlässiger Stoff mit einer wasserdampfdiffusionsäquivalenten Luftschichtdicke größer als 1500 m zu gelten. Alternativ kann die Folie auch metallfrei sein, da eine Gasdichtheit der Folie nicht zwingend erforderlich ist. Die Folie kann eine Compoundfolie sein. Das heißt, die Folie kann aus einem mehrschichtigen Verbundmaterial gefertigt sein.

Gemäß einer weiteren Ausführungsform ist die Folie zwischen der Bodendämmung und dem Innentankboden angeordnet.

Insbesondere liegt die Folie auf der Bodendämmung auf.

Gemäß einer weiteren Ausführungsform umfasst die Folie einen Wandabschnitt, der die Außentankwand teilweise bedeckt. Vorzugsweise ist die Folie mit diesem Wandabschnitt an der Außentankwand stoffschlüssig befestigt. Der Wandabschnitt der Folie umläuft die Außentankwand vorzugsweise in ihrer Umfangsrichtung.

Der Wandabschnitt kann innenseitig an der Außentankwand vollständig um diese umlaufen. Der Wandabschnitt kann innenseitig an der Außentankwand nach oben in Richtung des Außentankdachs hochgezogen sein. Der Wandabschnitt der Folie weist vorzugsweise eine Wandabschnittshöhe auf, die geringer ist als die Höhe der Außentankwand. Der Wandabschnitt der Folie ist in seiner Höhe vorzugsweise derart dimensioniert, dass eine ausreichend große Fläche für die stoffschlüssige Verbindung zwischen der Folie und der Außentankwand bereitgestellt wird. Die Folie ist vorzugsweise mit einem umlaufenden Wandabschnitt an der Außentankwand nach oben gezogen und mit dieser stoffschlüssig verbunden.

Gemäß einer weiteren Ausführungsform ist die Folie zumindest abschnittsweise innerhalb der Bodendämmung angeordnet.

Die Folie kann somit zumindest teilweise durch die Bodendämmung hindurchlaufen. Die Folie kann die Bodendämmung auch oberseitig abdecken.

Gemäß einer weiteren Ausführungsform weist die Bodendämmung eine druckfeste Dämmschicht, insbesondere eine Schaumglasblockschicht, eine Perlitbetonschicht, eine Holzschicht oder eine verstärkte Polyurethanschicht, auf, wobei die Folie zwischen der Dämmschicht und dem Innentankboden angeordnet ist.

Die Anzahl der Dämmschichten ist beliebig. Vorzugsweise ist die Dämmschicht aus einer Vielzahl an Schaumglasblöcken aufgebaut. Schaumglas kann auch als Cellular Glass oder Foam Glass bezeichnet werden.

Gemäß einer weiteren Ausführungsform weist die Bodendämmung mehrere Dämmschichten auf, zwischen denen die Folie zumindest abschnittsweise angeordnet ist.

Die Anzahl der Dämmschichten ist beliebig. Beispielsweise sind zwei oder drei derartige Dämmschichten vorgesehen. Die Folie kann zwischen zwei benachbarten Dämmschichten hindurchlaufen.

Gemäß einer weiteren Ausführungsform weist die Bodendämmung eine Lastverteilungsplatte auf, wobei die Lastverteilungsplatte zwischen dem Innentankboden und der Dämmschicht angeordnet ist, und wobei die Folie zwischen der Lastverteilungsplatte und der Dämmschicht angeordnet ist.

Die Folie kann auch auf der Lastverteilungsplatte platziert sein. Die Lastverteilungsplatte kann beispielsweise aus Beton und/oder Holz gefertigt sein. Die Lastverteilungsplatte kann mineralische und nicht-mineralische Werkstoffe umfassen. Die Lastverteilungsplatte ist unmittelbar unterhalb des Innentankbodens vorgesehen und verteilt die Last des Innentanks gleichmäßig auf die Bodendämmung. Beispielsweise ist die Lastverteilungsplatte eine gegossene Betonplatte. Die Lastverteilungsplatte kann auch ringförmig sein, so dass diese nur unterhalb der Innentankwand des Innentanks angeordnet ist und diese abstützt.

Gemäß einer weiteren Ausführungsform weist die Bodendämmung eine Ausgleichsschicht auf, wobei die Ausgleichsschicht zwischen dem Außentankboden und der Dämmschicht angeordnet ist.

Die Bodendämmung kann eine erste Ausgleichsschicht, die zwischen dem Außentankboden und der Dämmschicht angeordnet ist, und eine zweite

Ausgleichsschicht, die zwischen der Dämmschicht und der Lastverteilungsplatte angeordnet ist, aufweisen. Die Ausgleichsschichten können gegossene Betonplatten sein. Die Lastverteilungsplatte kann auch eine Ringform aufweisen, wobei sich die zweite Ausgleichsschicht dann innerhalb der Ringform befinden kann.

Gemäß einer weiteren Ausführungsform sind der Außentank und der Innentank aus einem Metallwerkstoff gefertigt.

Bevorzugt sind der Außentank und der Innentank aus Stahl gefertigt. Der Außentank und/oder der Innentank können auch aus Aluminium gefertigt sein. Die Gasdichtheit des Tanks ergibt sich durch den aus Stahl gefertigten Außentank. Der Tank kann auch als Metall-Metall-Tank, insbesondere als Stahl-Stahl-Tank, bezeichnet werden.

Weitere mögliche Implementierungen des Tanks umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Tanks hinzufügen.

Weitere vorteilhafte Ausgestaltungen des Tanks sind Gegenstand der Unteransprüche sowie der im Folgenden beschriebenen Ausführungsbeispiele des Tanks. Im Weiteren wird der Tank anhand von bevorzugten Ausführungsformen unter Bezugnahme auf die beigelegten Figuren näher erläutert.
Fig. 1 zeigt eine schematische Schnittansicht einer Ausführungsform eines Tanks zum Lagern eines kryogenen Fluids; und
Fig. 2 zeigt die Detailansicht II gemäß Fig. 1.

In den Figuren sind gleiche oder funktionsgleiche Elemente mit denselben Bezugszechen versehen worden, sofern nichts anderes angegeben ist.

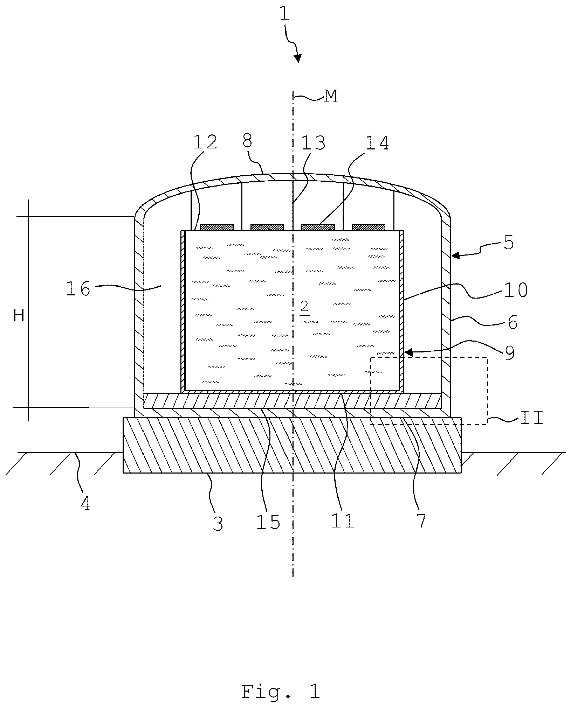

Die Fig. 1 zeigt eine stark vereinfachte schematische Schnittansicht einer Ausführungsform eines Tanks 1 zum Lagern eines kryogenen Fluids 2. Das kryogene Fluid 2 ist insbesondere ein kryogenes oder tiefkaltes verflüssigtes Gas. Beispiele für derartige kryogene Fluide sind Flüssigerdgas, flüssiges Ethen oder Ethylen (Siedepunkt bei Umgebungsdruck 169,43 K = -103,72 °C), flüssiges Ethan (Siedepunkt bei Umgebungsdruck 184,1 K = -88,9 °C) oder flüssiges Propan (Siedepunkt bei Umgebungsdruck 231,15 K = -42,1 °C).

Bevorzugt ist der Tank 1 jedoch zum Lagern von Flüssigerdgas oder Liquefied Natural Gas (LNG) geeignet. Das kryogene Fluid 2 kann einen flüssigen Aggregatszustand oder eine flüssige Phase und einen gasförmigen Aggregatszustand oder eine gasförmige Phase aufweisen beziehungsweise kann von der flüssigen Phase in die gasförmige Phase und umgekehrt verbracht werden. In dem Tank 1 wird das kryogene Fluid 2 in seiner flüssigen Phase gelagert. Dabei kann das kryogene Fluid 2 jedoch teilweise verdampfen und in die gasförmige Phase übergehen. Das verdampfte kryogene Fluid 2 kann als Boil-Off-Gas bezeichnet werden.

Der Tank 1 weist ein plattenförmiges Fundament 3 auf. Das Fundament 3 kann direkt im Erdboden 4 verankert sein. Das Fundament 3 kann auch eine Vielzahl an Stützen oder Ständern aufweisen, so dass das Fundament 3 beziehungsweise der Tank 1 aufgeständert ist und beabstandet von dem Erdboden 4 platziert ist. Das Fundament 3 kann beispielsweise aus Beton gefertigt sein. Beispielsweise kann das Fundament 3 eine gegossene kreisförmige Betonplatte sein. Das Fundament 3 kann jedoch auch jede beliebige andere Geometrie aufweisen. Der Tank 1 umfasst eine Mittel- oder Symmetrieachse M. Das Fundament 3 kann rotationssymmetrisch zu der Symmetrieachse M aufgebaut sein.

Weiterhin umfasst der Tank 1 einen auf dem Fundament 3 angeordneten Außentank 5. Der Außentank 5 ist bevorzugt aus Stahl gefertigt. Der Außentank 5 weist eine Außentankwand 6 auf. Die Außentankwand 6 kann auch als Außentankmantel bezeichnet werden. Die Außentankwand 6 kann kreiszylinderförmig ausgebildet sein. Insbesondere kann die Außentankwand 6 rotationssymmetrisch zu der Symmetrieachse M des Tanks 1 aufgebaut sein. Der Außentank 5 kann auch als Außenbehälter bezeichnet werden.

Der Außentank 5 weist einen Außentankboden 7 auf, der einteilig, insbesondere materialeinstückig, mit der Außentankwand 6 ausgebildet sein kann. Der Außentankboden 7 ist auf dem Fundament 3 platziert. Für den Fall, dass der Außentank 5 aus Stahl gefertigt ist, kann der Außentankboden 7 mit der Außentankwand 6 beispielsweise verschweißt sein.

Ferner umfasst der Außentank 5 ein nach außen gewölbtes kuppelförmiges Außentankdach 8. Der Außentank 5 kann in Form einer nach oben offenen Tasse mit Außentankboden 7 und Außentankwand 6 ausgebildet sein. Der Außentank 5 kann daher auch als Außentasse bezeichnet werden. Bevorzugt ist der Außentank 5 nach oben jedoch mit dem Außentankdach 8 verschlossen. Der Außentank 5 ist gasdicht.

Der Tank 1 umfasst weiterhin einen innerhalb des Außentanks 5 angeordneten Innentank 9. Der Innentank 9 ist bevorzugt aus einem Stahlwerkstoff gefertigt. Der Innentank 9 ist in Form einer Tasse ausgestaltet oder mit einem kuppelförmigen Innentankdach geschlossen. Der Innentank 9 umfasst eine kreiszylinderförmige Innentankwand 10 und einen Innentankboden 11. Die Innentankwand 10 kann auch als Innentankmantel bezeichnet werden. Der Innentank 9 ist, wie der Außentank 5, bevorzugt rotationssymmetrisch zu der Symmetrieachse M aufgebaut. Der Innentank 9 kann auch als Innenbehälter oder Innentasse bezeichnet werden. Der Innentank 9 ist innerhalb des Außentanks 5 und in Bezug auf die Symmetrieachse M koaxial zu diesem positioniert. Während des Lagerns des kryogenen Fluids 2 kontaktiert das kryogene Fluid 2 den Innentankboden 11 und die Innentankwand 10.

Der tassenförmige Innentank 9 ist mit einer von dem Außentankdach 8 des Außentanks 5 abgehängten Abdeckung 12 abgedeckt. Die Abdeckung 12 ist nicht fluiddicht mit dem Innentank 9 verbunden, so dass das zuvor erwähnte Boil-Off-Gas, das heißt, kryogenes Fluid 2, das von dem flüssigen Aggregatszustand in den gasförmigen Aggregatszustand übergegangen ist, aus dem tassenförmigen Innentank 9 austreten kann.

Die Abdeckung 12 ist mit Hilfe von metallischen Stäben oder Streben 13 von dem Außentankdach 8 abgehängt. Die Abdeckung 12 ist weiterhin nach oben oder zum Außentank 5 hin mit beispielsweise blockförmigen Dämmelementen 14 thermisch gedämmt. Die Dämmelemente 14 können als Dämmblöcke, Dämmmatten oder Dämmsäcke bezeichnet werden oder als solche ausgebildet sein. Beispielsweise können die Dämmelemente 14 aus einem aufgeschäumten Kunststoffmaterial, wie Polyurethan, Polystyrol oder dergleichen, gefertigt sein. Weiterhin können die Dämmelemente 14 aus Mineralwolle, wie beispielsweise Schlackenwolle, Glaswolle oder Steinwolle, gefertigt sein. Die Dämmelemente 14 können mineralische und/oder nicht-mineralische Werkstoffe umfassen.

Zwischen dem Innentankboden 11 des Innentanks 9 und dem Außentankboden 7 des Außentanks 5 ist eine Bodendämmung 15 vorgesehen. Die Bodendämmung 15 kann beispielsweise teilweise aus Schaumglas gefertigt sein. Schaumglas kann auch als Foam Glass oder Cellular Glass bezeichnet werden. Weiterhin kann die Bodendämmung 15 aus einzelnen blockförmigen Elementen, insbesondere aus Schaumglasblöcken, aufgebaut sein. Die Bodendämmung 15 kann weiterhin zumindest teilweise aus Beton gefertigt sein. Die Bodendämmung 15 ist ein lasttragendes Dämmbauteil und trägt den Innentank 9.

Zwischen der Außentankwand 6 und der Innentankwand 10 ist ein umlaufender Spalt 16 vorgesehen. Der Spalt 16 kann zumindest teilweise mit einem Dämmmaterial, wie beispielsweise Perlit oder Mineralwolle, ausgefüllt sein. Die Bodendämmung 15 kann zumindest teilweise in dem Spalt 16, das heißt, zwischen der Innentankwand 10 und der Außentankwand 6, angeordnet sein.

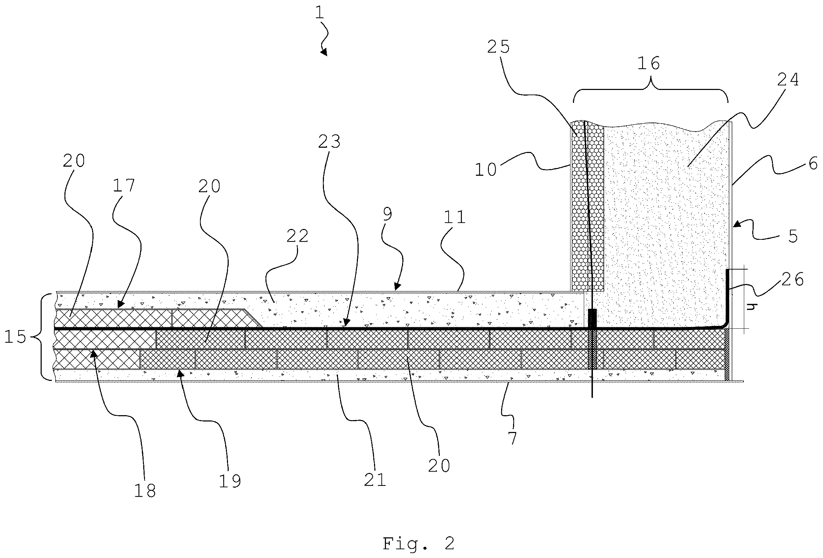

Die Fig. 2 zeigt einen vergrößerten Ausschnitt des Tanks 1 gemäß der Detailansicht II der Fig. 1. Bei der Ausführungsform des Tanks 1 gemäß den Fig. 1 und 2 sind sowohl der Außentank 5 als auch der Innentank 9 aus Stahl beziehungsweise aus einer Stahllegierung oder einem anderen geeigneten metallischen Werkstoff gefertigt. Wie die Fig. 2 zeigt, ist die Bodendämmung 15 zumindest abschnittsweise zwischen dem Außentankboden 7 und dem Innentankboden 11 angeordnet. Die Bodendämmung 15 kann jedoch, wie zuvor erwähnt, auch teilweise in dem Spalt 16 angeordnet sein.

Die Bodendämmung 15 umfasst bevorzugt mehrere druckfeste Dämmschichten 17 bis 19, insbesondere Schaumglasblockschichten, von denen in der Fig. 2 jedoch nur drei gezeigt sind. Die Anzahl der Dämmschichten 17 bis 19 ist beliebig. Jede Dämmschicht 17 bis 19 kann aus einer Vielzahl an Schaumglasblöcken 20 aufgebaut sein. Die Dämmschichten 17 bis 19 können neben Schaumglasblöcken 20 auch Perlitbeton, Holz, verstärktes Polyurethan oder andere geeignete Dämmmaterialien umfassen.

Zwischen einer untersten oder unteren Dämmschicht 19 und dem Außentankboden 7 ist eine Ausgleichsschicht 21 vorgesehen. Die Ausgleichsschicht 21 kann eine gegossene Betonplatte sein. Die Ausgleichsschicht 21 ist bevorzugt Teil der Bodendämmung 15. Oberhalb einer obersten oder oberen Dämmschicht 17 und unter dem Innentankboden 11 ist eine Lastverteilungsplatte 22 vorgesehen. Die Lastverteilungsplatte 22 kann beispielsweise ebenfalls aus Beton oder auch aus Holz gefertigt sein. Die Lastverteilungsplatte 22 kann mineralische und/oder nicht-mineralische Werkstoffe aufweisen. Der Innentank 9 stützt sich auf der Lastverteilungsplatte 22 ab. Auch die Lastverteilungsplatte 22 kann, muss jedoch nicht, Teil der Bodendämmung 15 sein.

Zwischen der Innentankwand 10 und der Außentankwand 6 ist der umlaufende Spalt 16 vorgesehen, der mit Perlit 24 und Mineralwolle 25 gefüllt sein kann. Es können auch andere Dämmmaterialien in den Spalt 16 eingefüllt sein.

Der Tank 1 umfasst ferner eine Folie 23, die in der Fig. 2 mit einer dicken durchgezogenen Linie dargestellt ist. Die Folie 23 kann hierbei zumindest abschnittsweise zwischen den Dämmschichten 17 bis 19 angeordnet sein. Weiterhin kann die Folie 23 auch zwischen einer mittleren Dämmschicht 18 und der Lastverteilungsplatte 22 vorgesehen sein. Die Folie 23 läuft bezüglich der Symmetrieachse M radial nach außen bis zu der Außentankwand 6 und ist mit dieser stoffschlüssig verbunden, insbesondere verklebt. Hierzu ist die Folie 23 mit einem umlaufenden Wandabschnitt 26 an der Außentankwand 6 nach oben gezogen und mit dieser stoffschlüssig verbunden, insbesondere verklebt. Der Wandabschnitt 26 der Folie 23 weist vorzugsweise eine Wandabschnittshöhe h auf, die geringer ist als die Höhe H der Außentankwand. Der Wandabschnitt h ist in seiner Höhe dimensioniert, um eine ausreichend große Fläche für die stoffschlüssige Verbindung zwischen der Folie 23 und der Außentankwand 6 bereitzustellen.

Die Folie 23 ist flüssigkeitsdicht, jedoch nicht zwingend gasdicht. Optional kann die Folie 23 auch gasdicht sein. Die Folie 23 kann auch als Flüssigkeitssperre, Flüssigkeitsbarriere oder Liquid Tight Barrier bezeichnet werden. Insbesondere weist die Folie 23 bevorzugt eine flüssigkeitsdichte und gasdurchlässige oder nicht gasdichte Bauausführung oder Bauweise auf. Falls die Folie 23 einen undurchdringlichen Stoff mit einer wasserdampfdiffusionsäquivalenten Luftschichtdicke größer als 1500 m (dies gilt beispielsweise für eine Aluminiumschicht mit einer Dicke von 0,05 mm) aufweist, kann die Folie 23 als gasdicht angesehen werden. Für die Flüssigkeitsdichtigkeit ist dies nicht erforderlich. Das heißt, die Folie 23 kann auch metallfrei sein.

Die Folie 23 kann aus einer Vielzahl an nebeneinander angeordneten Folienbahnen aufgebaut sein, die stoffschlüssig miteinander verbunden, beispielsweise miteinander verklebt oder verschweißt, sind. Dies ermöglicht eine sehr einfache und schnelle Montage der Folie 23.

Die Folie 23 verhindert bei einem Austreten des kryogenen Fluids 2 aus dem Innentank 9, beispielsweise bei einer Leckage, dass die flüssige Phase des kryogenen Fluids 2 in Richtung des Fundaments 3 in die Bodendämmung 15 eindringt. Hierdurch wird zuverlässig sowohl das Eindringen des kryogenen Fluids 2 in die Bodendämmung 15 als auch das Durchdringen des kryogenen Fluids 2 bis zum Außentankboden 7 vermieden. Ohne die Folie 23 könnte das Fundament 3 in unerwünschter Weise mit unzulässig tiefen Temperaturen beaufschlagt werden, wodurch starke Biegespannungen in dem Fundament 3 induziert werden könnten. Dies könnte zu Beschädigungen des Fundaments 3 führen. Dies gilt insbesondere für den Fall, dass das Fundament 3 aufgeständert ist. Mit Hilfe der Folie 23 werden die zuvor erläuterten Effekte zuverlässig vermieden. Für die Gasdichtheit des Tanks 1 sorgt dabei der aus Stahl gefertigte Außentank 5.

Dadurch, dass die Folie 23 sehr dünn und somit auch flexibel ist, werden auch dann, wenn die Folie 23 mit der Außentankwand 6 verklebt ist, auf diese nur minimale Kräfte aufgebracht. Im Vergleich zu einem Second Bottom aus Stahlplatten kann die Folie 23 mit geringerem Arbeitseinsatz deutlich schneller montiert werden. Dies reduziert die Montagekosten signifikant. Auch die Materialkosten werden signifikant reduziert. Die Montage der Folie 23 wird dadurch noch vereinfacht, dass diese in Form von einzelnen Folienbahnen verlegt werden kann, die nach dem Verlegen stoffschlüssig miteinander verbunden werden. Eine Vormontage der Folie 23 ist daher nicht erforderlich.

Obwohl die vorliegende Erfindung anhand von Ausführungsbeispielen beschrieben wurde, ist sie vielfältig modifizierbar, ohne vom Gegenstand des unabhängigen Anspruchs 1 abzuweichen.

### Verwendete Bezugszeichen

- 1: Tank
- 2: Fluid
- 3: Fundament
- 4: Erdboden
- 5: Außentank
- 6: Außentankwand
- 7: Außentankboden
- 8: Außentankdach
- 9: Innentank
- 10: Innentankwand
- 11: Innentankboden
- 12: Abdeckung
- 13: Strebe
- 14: Dämmelement
- 15: Bodendämmung
- 16: Spalt
- 17: Dämmschicht
- 18: Dämmschicht
- 19: Dämmschicht
- 20: Schaumglasblock
- 21: Ausgleichsschicht
- 22: Lastverteilungsplatte
- 23: Folie
- 24: Perlit
- 25: Mineralwolle
- 26: Wandabschnitt

- M: Symmetrieachse
- h: Wandabschnittshöhe
- H: Außentankwandhöhe

## Patentansprüche

1. Tank (1) zum Lagern eines kryogenen Fluids (2), insbesondere zum Lagern von Flüssigerdgas, mit einem Außentank (5), einem Innentank (9), der innerhalb des Außentanks (5) angeordnet ist, einer Bodendämmung (15), die zwischen einem Außentankboden (7) des Außentanks (5) und einem Innentankboden (11) des Innentanks (9) angeordnet ist, und einer flüssigkeitsdichten Folie (23), die zwischen dem Außentankboden (7) und dem Innentankboden (11) angeordnet ist, wobei die Folie (23) stoffschlüssig mit einer Außentankwand (6) des Außentanks (5) verbunden ist, **dadurch gekennzeichnet, dass** die Folie (23) ein Metall, insbesondere Aluminium, aufweist und/oder, dass die Folie (23) faserverstärkt, insbesondere glasfaserverstärkt, ist.

2. Tank nach Anspruch 1, wobei die Folie (23) zwischen der Bodendämmung (15) und dem Innentankboden (11) angeordnet ist.

3. Tank nach einem der Ansprüche 1 oder 2, wobei die Folie (23) mit der Außentankwand (6) verklebt ist.

4. Tank nach einem der Ansprüch 1-3, wobei die Folie (23) einen Wandabschnitt (26) umfasst, der die Außentankwand (6) teilweise bedeckt.

5. Tank nach Anspruch 4, wobei die Folie (23) mit dem Wandabschnitt (26) an der Außentankwand (6) stoffschlüssig befestigt ist.

6. Tank nach einem der Ansprüche 4 oder 5, wobei der Wandabschnitt (26) die Außentankwand (6) in ihrer Umfangsrichtung (6) umläuft.

7. Tank nach einem der Ansprüche 4 bis 6, wobei der Wandabschnitt der Folie (23) eine Wandabschnittshöhe (h) aufweist, die geringer ist als eine Höhe (H) der Außentankwand (6).

8. Tank nach einem der Ansprüche 1 - 7, wobei die Folie (23) zumindest abschnittsweise innerhalb der Bodendämmung (15) angeordnet ist.

9. Tank nach einem der Ansprüche 1 - 8, wobei die Bodendämmung (15) eine druckfeste Dämmschicht (17 - 19), insbesondere eine Schaumglasblockschicht, eine Perlitbetonschicht, eine Holzschicht oder eine verstärkte Polyurethanschicht aufweist, und wobei die Folie (23) zwischen der Dämmschicht (17 - 19) und dem Innentankboden (11) angeordnet ist.

10. Tank nach Anspruch 9, wobei die Bodendämmung (15) mehrere Dämmschichten (17 - 19) aufweist, zwischen denen die Folie (23) zumindest abschnittsweise angeordnet ist.

11. Tank nach Anspruch 9 oder 10, wobei die Bodendämmung (15) eine Lastverteilungsplatte (22) aufweist, wobei die Lastverteilungsplatte (22) zwischen dem Innentankboden (11) und der Dämmschicht (17 - 19) angeordnet ist, und wobei die Folie (23) zwischen der Lastverteilungsplatte (22) und der Dämmschicht (17 - 19) angeordnet ist.

12. Tank nach einem der Ansprüche 9 - 11, wobei die Bodendämmung (15) eine Ausgleichsschicht (21) aufweist, und wobei die Ausgleichsschicht (21) zwischen dem Außentankboden (7) und der Dämmschicht (17 - 19) angeordnet ist.

13. Tank nach einem der Ansprüche 1 - 12, wobei der Außentank (5) und der Innentank (9) aus einem Metallwerkstoff gefertigt sind.

## Claims

1. A tank (1) for storing a cryogenic fluid (2), in particular for storing liquefied natural gas, having an outer tank (5), an inner tank (9) arranged inside the outer tank (5), a base insulation (15) arranged between an outer tank base (7) of the outer tank (5) and an inner tank base (11) of the inner tank (9), and a liquid-tight film (23) arranged between the outer tank base (7) and the inner tank base (11), wherein the film (23) is integrally bonded to an outer tank wall (6) of the outer tank (5), **characterized in that**
the film (23) has a metal, in particular aluminum,
and/or **in that**
the film (23) is fiber-reinforced, in particular glass fiber-reinforced.

2. The tank according to claim 1, wherein the film (23) is arranged between the base insulation (15) and the inner tank base (11).

3. The tank according to either claim 1 or claim 2, wherein the film (23) is glued to the outer tank wall (6).

4. The tank according to any of claims 1-3, wherein the film (23) comprises a wall portion (26) which partially covers the outer tank wall (6).

5. The tank according to claim 4, wherein the film (23) is integrally attached with the wall portion (26) to the outer tank wall (6).

6. The tank according to any of claims 4 or 5, wherein the wall portion (26) runs around the outer tank wall (6) in its circumferential direction (6).

7. The tank according to any of claims 4 to 6, wherein the wall portion of the film (23) has a wall portion height (h) that is less than a height (H) of the outer tank wall (6).

8. The tank according to any of claims 1-7, wherein the film (23) is arranged at least in portions within the base insulation (15).

9. The tank according to any of claims 1-8, wherein the base insulation (15) has a pressure-resistant insulating layer (17-19), in particular a foam glass block layer, a perlite concrete layer, a wood layer or a reinforced polyurethane layer, and wherein the film (23) is arranged between the insulating layer (17-19) and the inner tank base (11).

10. The tank according to claim 9, wherein the base insulation (15) has a plurality of insulating layers (17-19) between which the film (23) is arranged at least in portions.

11. The tank according to claim 9 or 10, wherein the base insulation (15) comprises a load distribution plate (22), wherein the load distribution plate (22) is arranged between the inner tank base (11) and the insulating layer (17-19), and wherein the film (23) is arranged between the load distribution plate (22) and the insulating layer (17-19).

12. The tank according to any of claims 9-11, wherein the base insulation (15) comprises a leveling layer (21), and wherein the leveling layer (21) is arranged between the outer tank base (7) and the insulating layer (17-19).

13. The tank according to any of claims 1-12, wherein the outer tank (5) and the inner tank (9) are made of a metal material.

## Revendications

1. Réservoir (1) pour le stockage d'un fluide cryogénique (2), en particulier pour le stockage de gaz naturel liquéfié, comportant un réservoir extérieur (5), un réservoir intérieur (9) qui est disposé à l'intérieur du réservoir extérieur (5), une isolation de fond (15) qui est disposée entre un fond de réservoir extérieur (7) du réservoir extérieur (5) et un fond de réservoir intérieur (11) du réservoir intérieur (9), et un film (23) étanche aux liquides, qui est disposé entre le fond de réservoir extérieur (7) et le fond de réservoir intérieur (11), dans lequel le film (23) est relié par liaison de matière à une paroi de réservoir extérieur (6) du réservoir extérieur (5), **caractérisé en ce que**
le film (23) présente un métal, en particulier de l'aluminium,
et/ou **en ce que**
le film (23) est renforcé par des fibres, en particulier renforcé de fibres de verre.

2. Réservoir selon la revendication 1, dans lequel le film (23) est disposé entre l'isolation de fond (15) et le fond de réservoir intérieur (11).

3. Réservoir selon l'une des revendications 1 ou 2, dans lequel le film (23) est collé à la paroi de réservoir extérieur (6).

4. Réservoir selon l'une des revendications 1 à 3, dans lequel le film (23) comprend une section de paroi (26) qui recouvre partiellement la paroi de réservoir extérieur (6).

5. Réservoir selon la revendication 4, dans lequel le film (23) est fixé par liaison de matière à la section de paroi (26) sur la paroi de réservoir extérieur (6).

6. Réservoir selon l'une des revendications 4 ou 5, dans lequel la section de paroi (26) entoure la paroi de réservoir extérieur (6) dans sa direction circonférentielle (6).

7. Réservoir selon l'une des revendications 4 à 6, dans lequel la section de paroi du film (23) présente une hauteur de section de paroi (h) inférieure à une hauteur (H) de la paroi de réservoir extérieur (6).

8. Réservoir selon l'une des revendications 1 à 7, dans lequel le film (23) est disposé au moins par sections à l'intérieur de l'isolation de fond (15).

9. Réservoir selon l'une des revendications 1 à 8, dans lequel l'isolation de fond (15) présente une couche d'isolation (17-19) résistante à la pression, en particulier une couche de bloc de verre cellulaire, une couche de béton de perlite, une couche de bois ou une couche de polyuréthane renforcée, et dans lequel le film (23) est disposé entre la couche d'isolation (17-19) et le fond de réservoir intérieur (11).

10. Réservoir selon la revendication 9, dans lequel l'isolation de fond (15) présente plusieurs couches d'isolation (17-19) entre lesquelles le film (23) est disposé au moins par sections.

11. Réservoir selon la revendication 9 ou 10, dans lequel l'isolation de fond (15) présente une plaque de répartition de charge (22), dans lequel la plaque de répartition de charge (22) est disposée entre le fond de réservoir intérieur (11) et la couche d'isolation (17-19), et dans lequel le film (23) est disposé entre la plaque de répartition de charge (22) et la couche d'isolation (17-19).

12. Réservoir selon l'une des revendications 9 à 11, dans lequel l'isolation de fond (15) présente une couche de compensation (21), et dans lequel la couche de compensation (21) est disposée entre le fond de réservoir extérieur (7) et la couche d'isolation (17-19).

13. Réservoir selon l'une des revendications 1 à 12, dans lequel le réservoir extérieur (5) et le réservoir intérieur (9) sont fabriqués à partir d'un matériau métallique.
